## Europäisches Patentamt
## European Patent Office
## Office européen des brevets

(19)

(11) Veröffentlichungsnummer: **0 126 284**
**B1**

(12)

# EUROPÄISCHE PATENTSCHRIFT

(45) Veröffentlichungstag der Patentschrift:
**10.08.88**

(51) Int. Cl.⁴: **B 27 C 1/10**

(21) Anmeldenummer: **84104187.4**

(22) Anmeldetag: **13.04.84**

(54) **Hobelmaschine, insbesondere Handhobel.**

(30) Priorität: **24.05.83 DE 3318745**

(43) Veröffentlichungstag der Anmeldung:
**28.11.84 Patentblatt 84/48**

(45) Bekanntmachung des Hinweises auf die Patenterteilung:
**10.08.88 Patentblatt 88/32**

(84) Benannte Vertragsstaaten:
**AT BE CH DE FR GB IT LI LU NL SE**

(56) Entgegenhaltungen:
**DE-C-873 134**

(73) Patentinhaber: **Black & Decker Overseas AG,
Staedtle 36, FL- 9490 Vaduz (LI)**

(72) Erfinder: **Bergler, Otto, Jahnstrasse 18/1, D-7130
Mühlacker- Lomersheim (DE)**

(74) Vertreter: **Wilhelm, Hans- Herbert, Dr.- Ing.,
Wilhelm & Dauster Patentanwälte
Hospitalstrasse 8, D-7000 Stuttgart 1 (DE)**

EP 0 126 284 B1

## Beschreibung

Die Erfindung betrifft eine Hobelmaschine, insbesondere einen Handhobel nach dem Oberbegriff des Patentanspruches 1.

Eine solche Hobelmaschine ist bekannt (DE-PS 873 134). Diese bekannte Handhobelmaschine sieht eine dreiteilige Antriebsachse vor, die aus zwei fest und unverschiebbar an einem Gehäuse gehaltenen Lagerzapfen besteht, die mindestens teilweise hohl sind, wobei einer der Lagerzapfen angetrieben ist. Die dort als Büchsen bzw. Hülsen bezeichneten Lagerzapfen sind in Kugellager eingepreßt, die als Festlager im Gehäuse gehalten sind. Zwischen diese beiden hohlen Lagerzapfen wird ein hülsenförmiger Kupplungsteil eingesetzt, auf dem der Hobelkopf aufgepreßt ist. Der Kupplungsteil und die beiden Hülsen sind kupplungsartig miteinander verpaßt, und zwar so, daß der Hobelkopf mit der eingepreßten hülsenförmigen Kupplung in einer bestimmten Lage der Lagerzapfen von unten her formschlüssig eingesetzt werden kann, bis sein Kupplungsteil mit den Lagerzapfen fluchtet. Durch Einstecken eines Steckbolzens wird diese Lage formschlüssig fixiert.

Nachteil dieser dreiteiligen Antriebsachse ist, daß die Herstellung mit sehr geringen Toleranzen erfolgen muß, und zwar sowohl hinsichtlich der Kupplung zwischen dem Hobelkopf und den seitlichen Lagerzapfen, die nicht axial bewegbar sind, als auch hinsichtlich der Radialsicherung des Hobelkopfes, die dort nur dadurch erreicht werden kann, daß der Durchmesser des Steckbolzens eng an den Innendurchmesser des Kupplungsteiles und an die Axialbohrungen in den Lagerzapfen angepaßt wird. Der Bauaufwand für eine solche Hobelmaschine ist daher verhältnismäßig groß. Dazu kommt auch, daß jeder der auswechselbaren Hobelköpfe mit einer eingepreßten Hülse versehen sein muß.

Demgegenüber liegt der Erfindung die Aufgabe zugrunde, einen Handhobel der eingangs genannten Art so auszubilden, daß ein problemloses Wechseln von Hobelköpfen möglich wird, ohne daß der Bauaufwand zu groß wird.

Zur Lösung werden die kennzeichnenden Merkmale des Patentanspruches 1 vorgesehen. Durch diese Ausgestaltung werden enge Toleranzen überflüssig, weil der zum Einsetzen des Hobelkopfes notwendige Formschluß durch die Verschraubung in axialer Richtung sicher erreicht wird.

Weitere Ausführungsformen ergeben sich aus den Merkmalen der abhängigen Ausprüche, wobei Anspruch 6 den Vorteil einer exakten, aber schnellen Ausrichtung des Hobelkopfes bringt und die Unteransprüche 7 bis 10 den Vorteil aufweisen, daß auf einfache Weise eine Überlastsicherung geschaffen wird, die eine Beschädigung der Teile des Handhobels verhindert.

Die Erfindung ist anhand von Ausführungsbeispielen in den Zeichnungen dargestellt und in der nachfolgenden Beschreibung erläutert. Es zeigen:

Fig. 1 eine schematische Seitenansicht eines erfindungsgemäß ausgebildeten elektromotorisch angetriebenen Handhobels,

Fig. 2 eine zum Teil aufgeschnittene Draufsicht auf den Handhobel der Fig. 1,

Fig. 3 den Schnitt durch den Handhobel der Fig. 2 längs der Linie III-III,

Fig. 4 den Schnitt durch einen Lagerzapfen des Handhobels der Fig. 3 längs der Linie IV,

Fig. 5 einen Schnitt gemäß Fig. 3, jedoch mit ausmontiertem Hobelkopf,

Fig. 6 die Seitenansicht des demontierten Hobelkopfes,

Fig. 7 einen Schnitt ähnlich Fig. 3 jedoch bei einer anderen Ausführungsform eines Handhobels,

Fig. 8 den abmontierten Hobelkopf der Ausführung der Fig. 7,

Fig. 9 den Handhobel der Fig. 7 in der Stellung, in welcher der Hobelkopf demontiert ist,

Fig. 10 einen Schnitt ähnlich Fig. 3 jedoch bei einer weiteren Variante eines Handhobels,

Fig. 11 den Handhobel der Fig. 10 mit demontiertem Hobelkopf und

Fig. 12 schließlich einen Schnitt längs der Linie XII der Fig. 10.

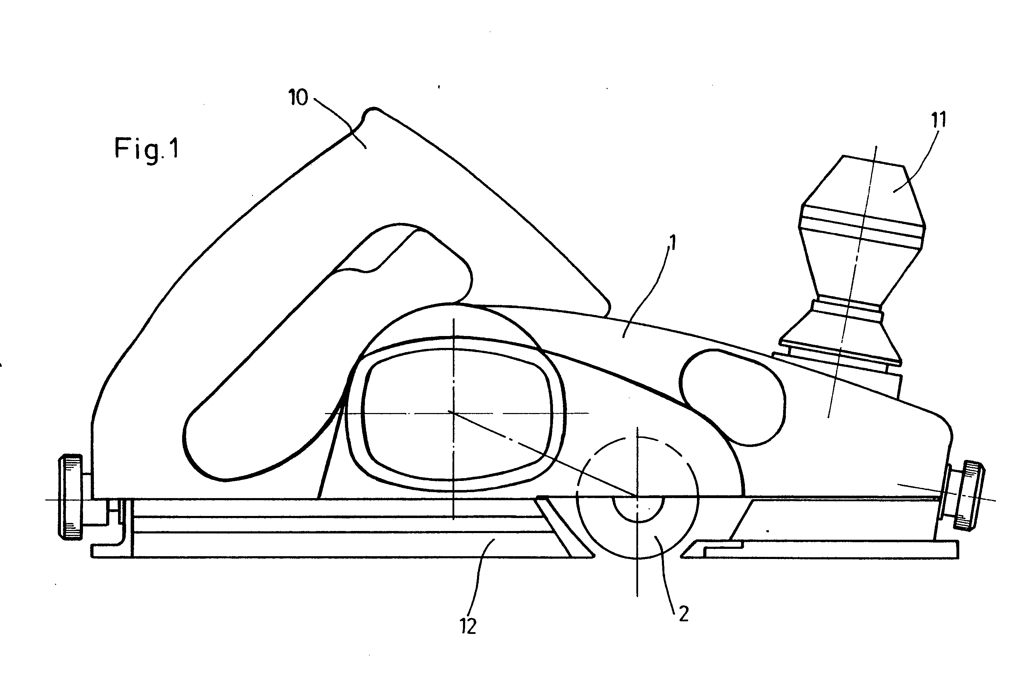

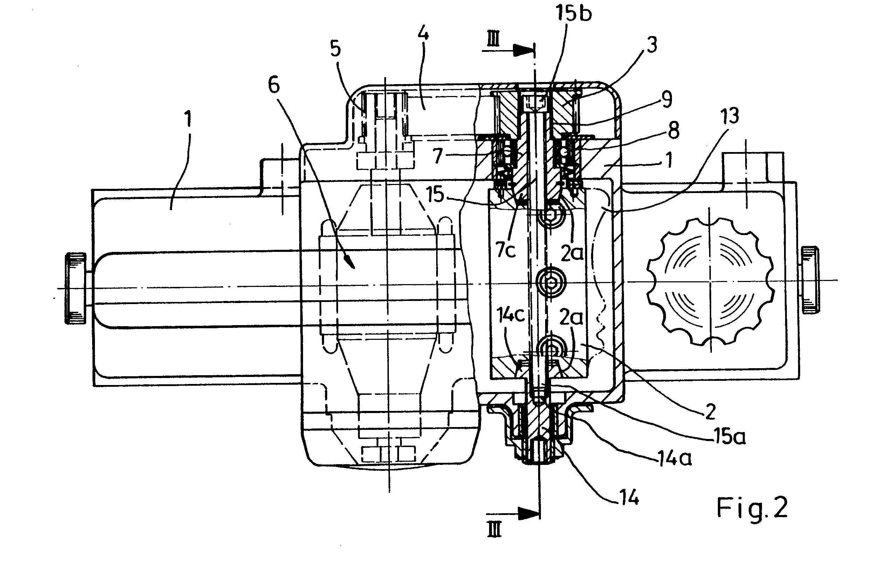

In den Fig. 1 bis 2 ist in einem Gehäuse 1 eines elektromotorisch betriebenen Handhobels ein Hobelkopf 2 drehbar gelagert, der drehfest mit einem Antriebsrad 3 verbunden ist, welches beim Ausführungsbeispiel über einen Antriebsriemen 4 von dem Ritzel 5 eines Elektromotors 6 in Drehung versetzt wird. Der Hobelkopf 2 ist zu diesem Zweck drehfest mit einem Lagerzapfen 7 verbunden, der drehbar in dem Festlager 8 angeordnet ist, das im Gehäuse 1 sitzt, der aber drehfest mit dem Antriebsrad 3 beispielsweise über eine Vielkeilverzahnung 9 verbunden ist. Der so in Drehung versetzte Hobelkopf 2 kann dann, wie an sich bekannt, mit Hilfe des Handgriffes 10 eines Handknaufes 11 zusammen mit dem Gehäuse 1 des Handhobels auf seiner Stützfläche 12 für den Bearbeitungsvorgang verschoben werden.

Im Gegensatz zu bekannten Ausführungen ist der Hobelkopf 2, der beispielsweise mit einem Profilmesser 13 ausgerüstet sein kann, selbst nicht mit einer Antriebswelle fest verbunden, vielmehr ist diese Antriebswelle bei dem gezeigten Ausführungsbeispiel in den Lagerzapfen 7, einen zweiten Lagerzapfen 14 auf der dem Festlager 8 gegenüberliegenden Gehäuseseite und in einen diese beiden Lagerzapfen 7, 14 untereinander und mit dem Hobelkopf 2 verbindenden Schraubbolzen 15 unterteilt, der mit seinem freien und mit dem Gewinde versehenen Ende 15a in ein Innengewinde 14a des Lagerzapfens 14 eingeschraubt ist. Der Schraubbolzen 15 besitzt einen Kopf 15b mit einem Innensechskant und der liegt mit diesem Kopf 15b axial an der nach außen gerichteten Stirnfläche des Lagerzapfens 7 an. Der Lagerzapfen 14 besitzt ebenso wie der Lagerzapfen 7 einen Zentrierkonus 14c, der dem Zentrierkonus 7c des Lagerzapfens 7 entspricht und jeweils in eine seiner Außenkontur entsprechende Ausnehmung 2a im Hobelkopf 2 eingreift. Der Lagerzapfen 14 weist an seinem nach außen gerichteten Ende ebenfalls einen Innensechskant auf und er ist axial verschiebbar in einem Nadellager 16 gehalten. Wird daher der Schraubbolzen 15 mit dem Lagerzapfen 17 verschraubt, drückt sich jeweils der Zentrierkonus 7c bzw. 14c in die entsprechende Ausnehmung 2a des Hobelkopfes 2 herein, der auf diese Weise axial im Gehäuse 1 fixiert wird. Der Lagerzapfen 7 ist nämlich in dem als Kugellager ausgebildeten Festlager 8 axial gehalten.

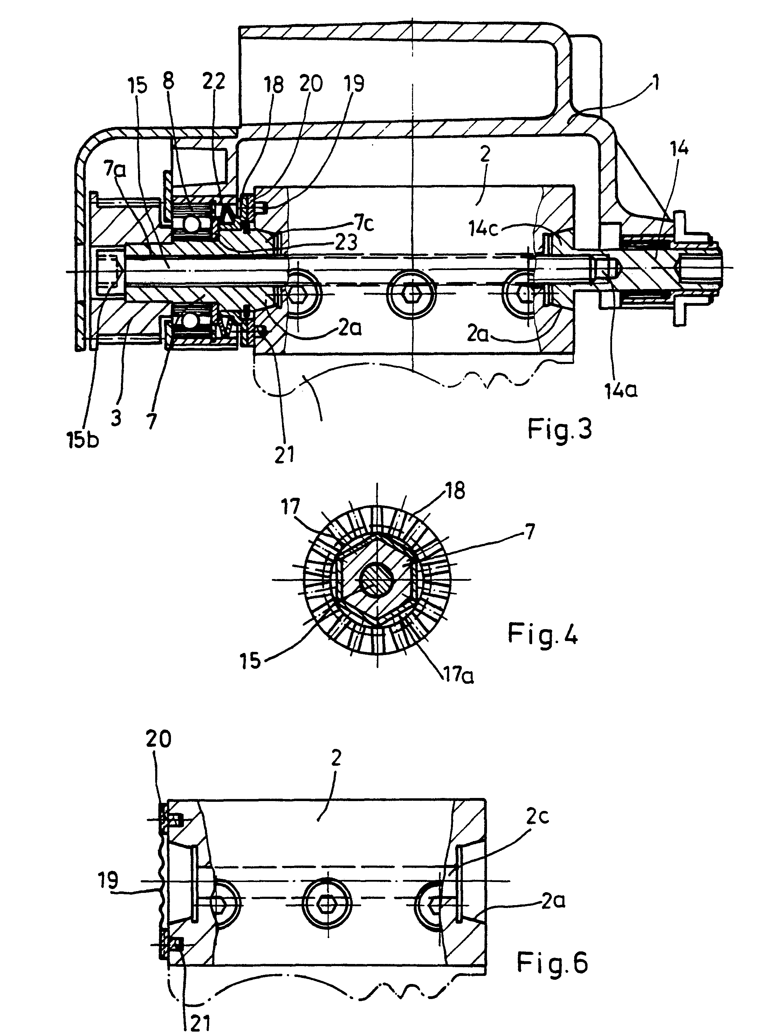

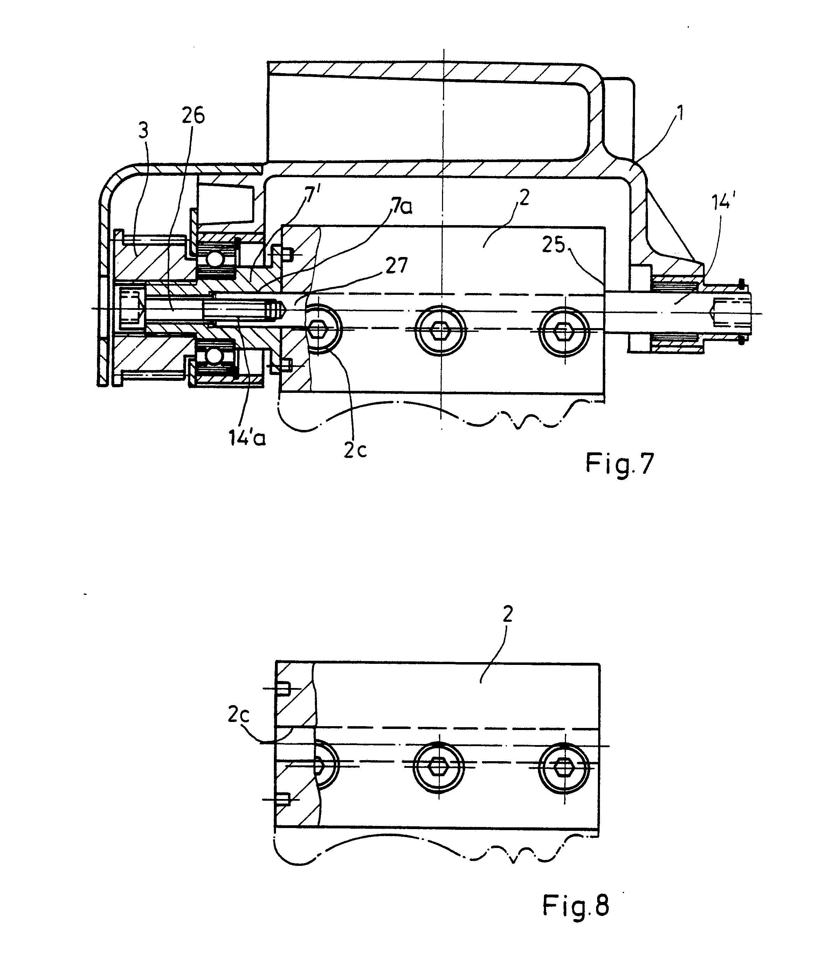

Um den Antrieb des Hobelkopfes 2 zu bewirken, ist der Lagerzapfen 7 über eine bestimmte Länge (siehe Fig. 4) mit einer sechskantigen Außenkontur versehen. Auf diesen Bereich ist eine korrespondierend ausgebildete Hülse 17 aufgeschoben, die an ihrem dem Hobelkopf 2 zugewandten Ende in einen Kupplungsring 18 über geht, der als Wellring ausgebildet ist. Dieser Kupplungsring 18 besteht formschlüssig in Eingriff mit einem korrespondierend ausgebildeten Kupplungsring 19, der fest mit einem Ringflansch 20 verbunden ist, der seinerseits über Zapfen 21 drehfest mit dem Hobelkopf 2 (Fig. 6) verbunden ist. Die Hülse 17 wird unter der Wirkung von zwei Tellerfedern 22, die an dem Bereich 17a des Flansches der Hülse 17 anliegen, der in den Kupplungsring 18 übergeht, unter Federkraft gegen den Kupplungsring 19 gedrückt. Zu diesem Zweck liegen die Tellerfedern 22 an einer Anschlagscheibe 23 des Festlagers 8 an. Diese Antriebsverbindung weist daher den Vorteil auf, daß durch die Wellringkupplung die vom Antriebsrad 3 auf den Hobelkopf 2 zu übertragende Drehmomente auf einen bestimmten Betrag begrenzt werden können, bei dem die Wellringe gegen die Kraft der Tellerfedern 22 außer Eingriff kommen, so daß eine weitere Drehung des Hobelkopfes 2 verhindert ist.

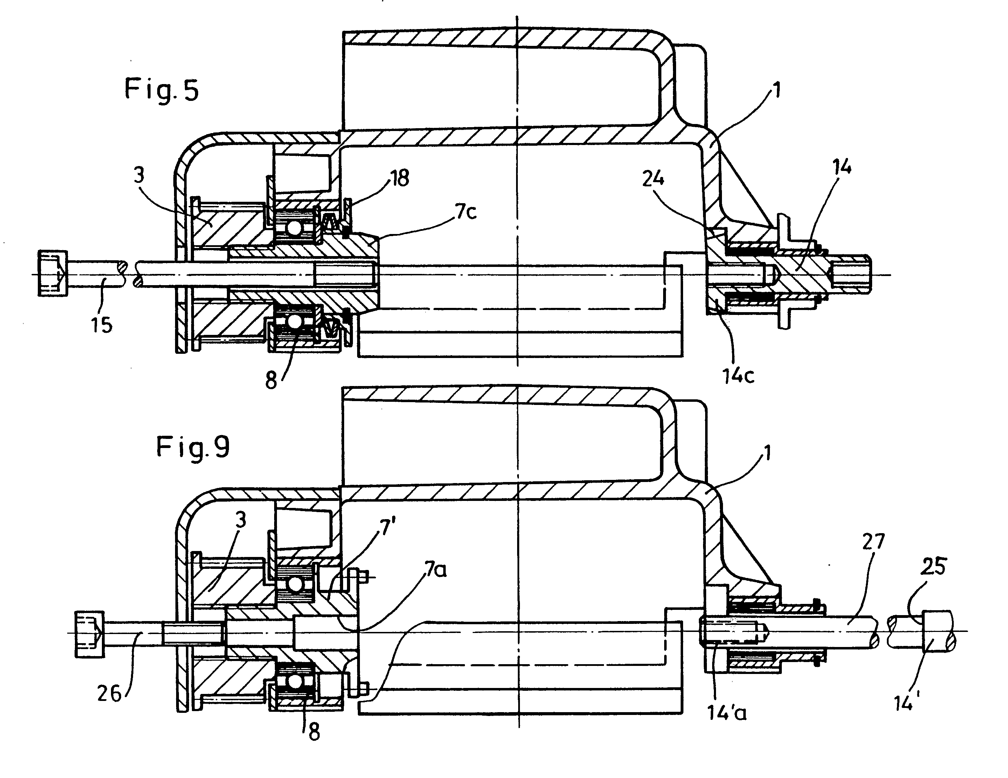

Der Hobelkopf 2 kann in sehr einfacher Weise und schnell aus dem Gehäuse 1 dadurch demontiert werden, daß, wie Fig. 5 zeigt, der Schraubbolzen 15 vom Lagerzapfen 14 gelöst wird. Der Lagerzapfen 14 wird dann bis zum Anschlag des Zentrierkonus 14c in einer Ausnehmung 24 des Gehäuses 1 nach rechts herausgezogen, so daß der Hobelkopf 2 abgenommen und durch einen anderen ersetzt werden kann. Der Hobelkopf 2 wird dabei mit dem Kupplungsring 19 gemäß Fig. 6 ausgebaut. Der neu einzusetzende Hobelkopf kann mit einem neuen Kupplungsring versehen sein. Möglich ist allerdings auch der Austausch des Kupplungsringes.

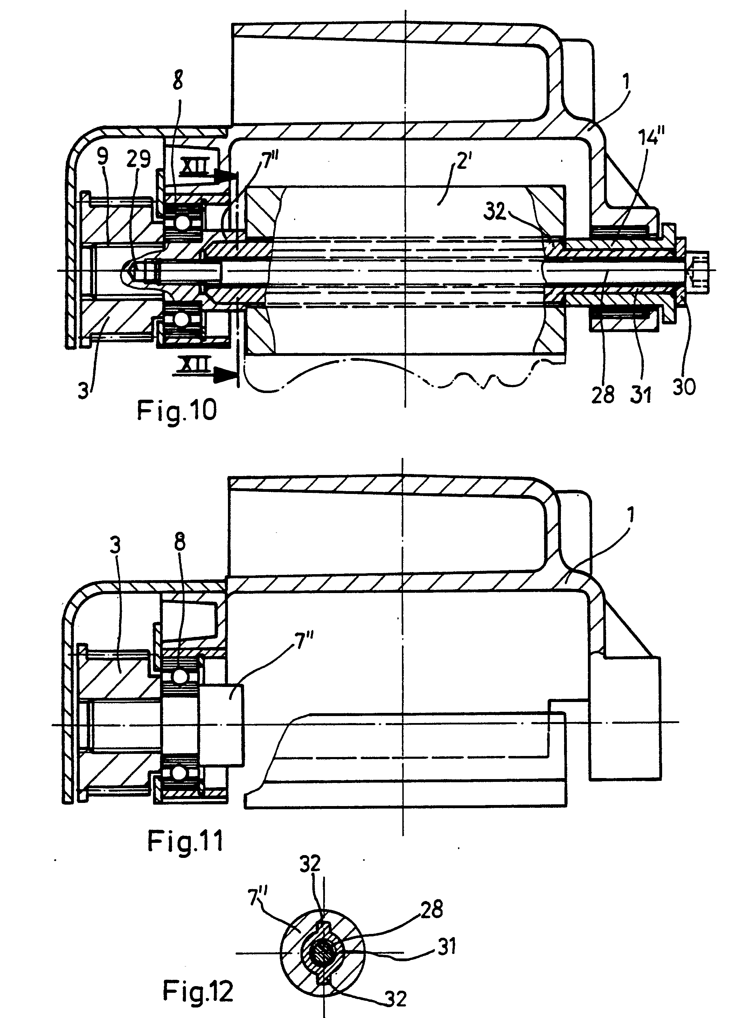

In den Fig. 7, 8 und 9 ist eine andere Ausführungsform gezeigt, bei der eine Wellring- oder eine andere Rutschkupplung nicht vorgesehen ist. Bei der Ausführungsform der Fig. 7, 8 und 9 ist der durch den Hobelkopf 2 geführte Steckbolzen einstückig mit dem Lagerzapfen 14' ausgebildet, so daß sich der Lagerzapfen 14' hier von einem Anschlagkragen 25 aus mit geringerem Durchmesser bis in den Lagerzapfen 7' herein erstreckt, der bei dieser Ausführung, ebenso wie bei der Ausführung der Fig. 1 bis 6, eine Axialbohrung 7a aufweist, die mit der Axialbohrung 2c des Hobelkopfes 2 fluchtet. Wird durch die Axialbohrung 7a eine Kopfschraube 26 hindurchgesteckt und mit dem Innengewinde 14'a des Wellenteiles 27 des Lagerzapfens 14' verbunden, dann ist der Hobelkopf 2 ebenfalls axial zwischen den Lagerzapfen 7' und 14' fixiert. Er kann, wie Fig. 9 zu entnehmen ist, ebenfalls sehr einfach und leicht ausgewechselt werden.

Die Fig. 10 bis 12 schließlich zeigen eine weitere Möglichkeit, eine schnellwechselbefestigung für den Hobelkopf 2 auszuführen. Hier ist der Lagerzapfen 7'' nicht mit einer Axialbohrung versehen, dagegen der andere Lagerzapfen, der hier als eine Hülse 14'' ausgebildet ist. Durch diese Hülse 14'' ist ein Schraubbolzen 28 hindurchgesteckt, der durch den Hobelkopf 2' in das in einem Sackloch 29 im Lagerzapfen 7'' angeordnete Gewinde hereingreift und so über die Anschlagscheibe 30 die Hülse 14'' und den Hobelkopf 2' gegen den in dem Festlager 8 sitzenden Lagerzapfen 7'' drückt, der mit seiner nach rechts gerichteten Stirnseite am Hobelkopf 2' anliegt. Um bei dieser Ausführung die Drehverbindung herzustellen, ist in den Hobelkopf 2' und in einen Teil des Lagerzapfens 7'' eine Hülse 31 eingeschoben, die mit zwei gegenüberliegenden Rippen 32 versehen ist, welche formschlüssig in entsprechenden Nuten im Hobelkopf 2' bzw. in dem Lagerzapfen 7'' eingreifen. Die von dem Antriebsrad 3 über die Vielkeilverzahnung 9 ausgelöste Drehbewegung des Lagerzapfens 7'' überträgt sich daher über die formschlüssig in diesem sitzende Hülse 31 auf den Hobelkopf 2'.

**Patentansprüche**

1. Hobelmaschine, insbesondere Handhobel, bestehend aus einem in einem Gehäuse (1) angeordneten elektromotorischen Antrieb (6), der mit einem Antriebsrad (3) in Verbindung steht, das drehfest mit einer im Gehäuse radial und axial gelagerten Antriebswelle (7, 14, 15) eines mit Hobelmessern bestückten Hobelkopfes (2, 2') verbunden ist und wobei der Hobelkopf eine Axialbohrung aufweist und durch einen Zentralen Bolzen (15, 27, 28) zwischen zwei, an zwei Lagerzapfen (7, 14) angeordneten Anschlägen (7c, 14c, 25) gehalten ist, dadurch gekennzeichnet, daß einer der Lagerzapfen (14, 14', 14'') axial in seiner Lagerstelle verschiebbar angeordnet ist und daß der zentrale Bolzen als Schraubbolzen (15, 27, 28) ausgebildet ist und die Lagerzapfes (7, 7', 7'', 14, 14', 14'') unter Einspannung des Hobelkopfes (2, 2') miteinander verbindet.

2. Hobelmaschine nach Anspruch 1, dadurch gekennzeichnet, daß einer der Lagerzapfen (14, 14') mit einem Gewinde (Innengewinde 14a, 14'a) zur Aufnahme des Schraubbolzens (15, 26) versehen ist.

3. Hobelmaschine nach den Ansprüchen 1 oder 2, dadurch gekennzeichnet, daß der dem Antriebsrad (3) zugeordnete Lagerzapfen (7, 7') mit der Axialbohrung (7a) versehen und in einem Festlager (8) gehalten ist.

4. Hobelmaschine nach Anspruch 1, dadurch gekennzeichnet, daß einer der Lagerzapfen (14') aus einem Stück mit einem den Schraubbolzen bildenden Wellenteil (27) hergestellt ist.

5. Hobelmaschine nach Anspruch 4, dadurch gekennzeichnet, daß der Wellenteil (27) mit einem Anschlagkragen (25) für den Hobelkopf (2) und mit einem Innengewinde (14'a) am freien Ende versehen ist, in das eine Kopfschraube (26) eingreift, die durch den dem Antriebsrad (3) zugeordneten Lagerzapfen (7') durchgreift.

6. Hobelmaschine nach Anspruch 3, dadurch gekennzeichnet, daß beide Lagerzapfen (7, 14) mit je einem dem Hobelkopf (2) zugewandten Zentrierkonus (7c, 14c) versehen sind, die in entsprechende Ausnehmungen (2a) am Hobelkopf (2) eingreifen.

7. Hobelmaschine nach Anspruch 6, dadurch gekennzeichnet, daß der dem Antriebsrad (3) zugeordnete Lagerzapfen (7) mit einer am Hobelkopf (2) seitlich angreifenden Kupplung (Kupplungsring 18, 19) versehen ist.

8. Hobelmaschine nach Anspruch 7, dadurch gekennzeichnet, daß die Kupplung aus einem mit Hilfe einer Hülse (17) drehfest aber axial unter Federkraft verschiebbar am Lagerzapfen (7) gelagerten Kupplungsring (18) und aus einem mit diesem zusammenwirkenden Kupplungsring (19) an der Stirnseite des Hobelkopfes (2) besteht.

9. Hobelmaschine nach Anspruch 8, dadurch gekennzeichnet, daß beide Kupplungsringe (18, 19) als Wellringe ausgebildet sind.

10. Hobelmaschine nach den Ansprüchen 8 und 9, dadurch gekennzeichnet, daß die Hülse (17) einen unrunden Querschnitt besitzt, der einer entsprechenden Außenkontur des Lagerzapfens (7) angepaßt ist.

11. Hobelmaschine nach den Ansprüchen 1 und 2, dadurch gekennzeichnet, daß der zweite Lagerzapfen als eine Hülse (14'') ausgebildet ist, durch die sowohl der Schraubbolzen (28) als auch eine die Drehverbindung zwischen Antriebsrad (3) und Hobelkopf (2') bewirkende Hülse (31) mit Rippen (32) geführt ist, die in Nuten des dem Antriebsrad (3) zugeordneten Lagerzapfens (7'') bzw. in Nuten des Hobelkopfes (2') eingreifen.

## Claims

1. Planing machine, especially a hand plane, consisting of an electric motor drive (6) arranged in a housing (1), whereby the drive is connected to a drive gear (3), which is connected so that it cannot be rotated to a driving spindle (7, 14, 15) of a plane head (2, 2') fitted with planing knives, whereby the driving spindle is mounted radially and axially in the housing and whereby the plane head is provided with an axial bore and is held by a central bolt (15, 27, 28) between two stops (7c, 14c, 25) arranged at two journals (7, 14), characterised in that one of the journals (14, 14', 14'') is arranged so that it can be displaced axially in its bearing position and in that the central bolt is constructed in the form of screw bolts (15, 27, 28) and the journals (7, 7', 7'', 14, 14', 14'') are connected to each other with the fixing of the plane head (2, 2').

2. Planing machine according to claim 1, characterised in that one of the journals (14, 14') is provided with a thread (internal thread 14a, 14'a) for accommodating the screw bolt (15, 26).

3. Planing machine according to claims 1 or 2, characterised in that the journal (7, 7') associated with the drive gear (3) is provided with the axial bore (7a) and held in a fixed bearing (8).

4. Planing machine according to claim 1, characterised in that one of the journals (14') is made in one piece with a spindle part (27) which forms the screw bolt.

5. Planing machine according to claim 4, characterised in that the spindle part (27) is provided with a stop collar (25) for the plane head (2) and with an internal thread (14'a) at the free end, with which a cap screw (26) engages, which engages through the journal (7') associated with the drive gear (3).

6. Planing machine according to claim 3, characterised in that both journals (7, 14) are each provided with a centering cone (7c, 14c) which is turned towards the plane head (2) and which engage with corresponding recesses (2a) in the plane head (2).

7. Planing machine according to claim 6, characterised in that the journal (7) associated with the drive gear (3) is provided with a coupling (coupling ring 18, 19), which engages laterally at the plane head (2).

8. Planing machine according to claim 7, characterised in that the coupling consists of a coupling ring (18) which is located at the journal (7) so that it cannot be rotated but can be displaced axially by spring tension with the aid of a sleeve (17) and of a coupling ring (19) at the end face of the plane head (2) which interacts with this.

9. Planing machine according to claim 8, characterised in that both coupling rings (18, 19) are constructed as corrugated rings.

10. Planing machine according to claims 8 and 9, characterised in that the sleeve (17) is of non round cross section, which is made to match a corresponding external contour of the journal (7).

11. Planing machine according to claims 1 and 2, characterised in that the second journal is constructed as a sleeve (14'') through which pass both the screw bolt (28) and a sleeve (31) with ribs (32), which effects the rotary connection between the drive gear (3) and the plane head (2'), whereby the ribs engage with grooves of the journal (7'') associated with the drive gear (3) or with grooves of the plane head (2').

## Revendications

1. Rabot, spécialement rabot a main, composé d'un entraînement (6) par moteur électrique, disposé dans un carter (1), qui est relié à une roue d'entraînement (3), qui est reliée de manière fixe en rotation avec un arbre d'entraînement (7, 14, 15), guidé radialement et axialement dans le carter, d'une tête de rabot (2, 2') équipée de lames de rabot et la tête de rabot possédant à cette occasion un perçage axial et étant maintenu par un boulon central (15, 27, 28) entre deux butées (7c, 14c, 25), disposees sur deux tourillons de palier (7, 14), caractérisé en ce que l'un des tourillons de palier (14, 14', 14'') est disposé de manière mobile axialement dans la position de guidage et en ce que le boulon central est exécuté en boulon fileté (15, 27, 28) et relié entre eux les tourillons de paliers (7, 7', 7'', 14, 14', 14''), avec le serrage de la tête de rabot (2, 2').

2. Rabot selon la revendication 1, caractérisé en ce que l'un des tourillons de palier (14, 14') possède un filetage (filetage intérieur 14a, 14'a) pour recevoir le boulon fileté (15, 26).

3. Rabot selon les revendications 1 ou 2, caractérisé en ce que le tourillon de palier (7, 7') associé à la roue d'entraînement (3) reçoit le perçage axial (7a) et est maintenu dans un palier fixe (8).

4. Rabot selon la revendication 1, caractérisé en ce que l'un des tourillons de palier (14') est fabriqué d'une seule pièce, avec une partie d'arbre (27) formant le boulon fileté.

5. Rabot selon la revendication 4, caractérisé en ce que la partie d'arbre (27) est pourvue d'un collet de butée (25) pour la tête de rabot (2) et d'un filetage intérieur (14'a) à l'extrémité libre dans lequel engrène une vis à tête (26), qui engrène au travers du tourillon de palier (7') attribué à la roue d'entraînement (3).

6. Rabot selon la revendication 3, caractérisé en ce que les deux tourillons de palier (7, 14) possèdent chacun un cône de centrage (7c, 14c) tourné vers la tête de rabot (2), qui engrène dans des évidements correspondants (2a), sur la tête de rabot (2).

7. Rabot selon la revendication 6, caractérisé en ce que le tourillon de palier (7) associé à la roue d'entraînement (3) possède un accouplement (bague d'accouplement 18, 19) engrènant latéralement sur la tête de rabot (2).

8. Rabot selon la revendication 7, caractérisé en ce que l'accouplement se compose d'une bague d'accouplement (18) guidée à l'aide d'un manchon (17), fixe en rotation, mais de manière mobile axialement, sous l'action d'un ressort et d'une bague d'accouplement (19) qui travaille avec elle, sur la face frontale de la tête de rabot (2).

9. Rabot selon la revendication 8, caractérisé en ce que les deux bagues d'accouplement sont conçues en bagues ondulées.

10. Rabot selon les revendications 8 et 9, caractérisé en ce que le manchon (17) possède une section non ronde, qui est adaptée à un contour extérieur du tourillon de palier (7).

11. Rabot selon les revendications 1 et 2, caractérisé en ce que le deuxième tourillon de palier est conçu comme un manchon (14''), au travers duquel est guidé aussi bien le boulon fileté (28) qu'également un manchon (31) avec des nervures (32) qui provoque la liaison en rotation entre la roue d'entraînement (3) et la tête de rabot (2) et ces nervures engrènent dans des gorges du tourillon de palier (7'') attribué à la roue d'entraînement (3), respectivement dans des gorges de la tête de rabot (2').

Fig.1

0 126 284

Fig.2

0 126 284

Fig.3

Fig.4

Fig.6

Fig.5

Fig.9

Fig.7

Fig.8

Fig.10

Fig.11

Fig.12